(19) Europäisches Patentamt
European Patent Office
Office européen des brevets

(11) **EP 1 397 002 B1**

(12) **EUROPÄISCHE PATENTSCHRIFT**

(45) Veröffentlichungstag und Bekanntmachung des Hinweises auf die Patenterteilung:
**26.08.2009 Patentblatt 2009/35**

(51) Int Cl.:
***H04N 7/01*** *(2006.01)*

(21) Anmeldenummer: **03016485.9**

(22) Anmeldetag: **22.07.2003**

(54) **Gradientengestütztes Verfahren zur Bildpunktinterpolation**

A gradient based method for the interpolation of picture elements

Procédé d'interpolation des éléments d'image en fonction du gradient

(84) Benannte Vertragsstaaten:
**DE FR GB IT NL**

(30) Priorität: **07.08.2002 DE 10236204**

(43) Veröffentlichungstag der Anmeldung:
**10.03.2004 Patentblatt 2004/11**

(73) Patentinhaber: **Micronas GmbH
79108 Freiburg i. Br. (DE)**

(72) Erfinder: **Hahn, Marko
81373 München (DE)**

(74) Vertreter: **Epping - Hermann - Fischer
Patentanwaltsgesellschaft mbH
Ridlerstrasse 55
80339 München (DE)**

(56) Entgegenhaltungen:
**US-B1- 6 281 875**

- **KUO C J ET AL: "ADAPTIVE EDGE-BASED INTERPOLATION FOR SCANNING RATE CONVERSION" 1996 IEEE INTERNATIONAL CONFERENCE ON ACOUSTICS, SPEECH, AND SIGNAL PROCESSING - PROCEEDINGS. (ICASSP). ATLANTA, MAY 7 - 10, 1996, NEW YORK, IEEE, US, Bd. 4 CONF. 21, 7. Mai 1996 (1996-05-07), Seiten 2120-2123, XP000681662 ISBN: 0-7803-3193-1**
- **DOYLE T ET AL: "PROGRESSIVE SCAN CONVERSION USING EDGE INFORMATION" SIGNAL PROCESSING OF HDTV, 2. TURIN, AUG. 30 - SEPT. 1, 1989, PROCEEDINGS OF THE INTERNATIONAL WORKSHOP ON HDTV, AMSTERDAM, ELSEVIER, NL, Bd. WORKSHOP 3, 30. August 1989 (1989-08-30), Seiten 711-721, XP000215289**
- **HAAN DE G ET AL: "DEINTERLACING - AN OVERVIEW" PROCEEDINGS OF THE IEEE, IEEE. NEW YORK, US, Bd. 86, Nr. 9, September 1998 (1998-09), Seiten 1839-1857, XP000850198 ISSN: 0018-9219**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Interpolation eines Bildpunktes in einem matrixartig aufgebauten Bild, das eine Vielzahl von Bildpunkten aufweist, denen jeweils eine Bildinformation, beispielsweise ein Helligkeitswert bzw. Luminanzwert, ein Farbwert oder ein Kontrastwert zugeordnet ist.

Derartige Verfahren finden beispielsweise bei der Wiedergabe von Fernsehbildern Anwendung. Analoge Fernsehsignale enthalten in hinlänglich bekannter Weise zeitlich aufeinanderfolgend übertragene Halbbilder, die zeilenweise aufgebaut sind, wobei abwechselnd ein die geradzahligen und ein die ungeradzahligen Zeilen umfassendes Halbbild übertragen wird.

Um aus einem derartigen Halbbild ein Vollbild zu erzeugen sind verschiedene Verfahren bekannt.

Im einfachsten Fall werden die Zeilen des Halbbildes verdoppelt, die Bildinformationen der Bildpunkte einer Zwischenzeile zwischen zwei Zeilen eines Halbbildes sind also durch die Bildinformationswerte der über der Zwischenzeile oder unter der Zwischenzeile liegenden Bildzeile vorgegeben. Bei diesem Vorgehen, bei dem jeweils zwei benachbarte Zeilen identisch sind, erscheinen diagonal in dem Bild verlaufende Kanten allerdings abgestuft bzw. treppenartig.

Bei einem weiteren bekannten Verfahren wird der Bildinformationswert zu einem Bildpunkt einer Zwischenzeile dadurch ermittelt, dass der Mittelwert der Bildinformationswerte des in vertikaler Richtung über dem zu interpolierenden Bildpunkt und des in vertikaler Richtung unter dem zu interpolierenden Bildpunkt liegenden Bildpunktes gebildet und als Bildinformationswert des Bildpunktes der Zwischenzeile ausgewählt wird.

Nachteilig ist bei diesem Verfahren, dass vertikale Kanten durch Einfügen einer die Mittelwerte enthaltenen Zeile unscharf erscheinen.

Die US 6,281,875 B1 beschreibt ein Interpolationsverfahren für die Interpolation eines einem Bildpunkt zugeordneten Datenwertes. Bei diesem Verfahren ist vorgesehen, die Position des zu interpolierenden Bildpunktes bezogen auf die Position von vier benachbarten Bildpunkten zu ermitteln und den Datenwert des zu interpolierenden Bildpunktes durch Gewichten der Datenwerte der umliegenden Bildpunkte und durch Addieren der gewichteten Datenwerte zu ermitteln. Die Gewichtung der Datenwerte der umliegenden Bildpunkte erfolgt dabei abhängig vom Abstand zwischen der Position des zu interpolierenden Bildpunktes und der Position der umliegenden Bildpunkte. Bei einem Spezialfall dieses bekannten Verfahrens ist vorgesehen, lediglich die Datenwerte von zwei Bildpunkten für die Interpolation heranzuziehen, und zwar dann, wenn in der Richtung, in der diese beiden Bildpunkte benachbart zueinander angeordnet sind, ein Gradient ermittelt wird.

Ziel der vorliegenden Erfindung ist es, ein Verfahren zur Bildpunktinterpolation zur Verfügung zu stellen, das einfach realisierbar ist und das insbesondere die oben genannten Nachteile nicht aufweist. Dieses Ziel wird durch ein Verfahren gemäß der Merkmale des Anspruchs 1 gelöst. Vorteilhafte Ausgestaltungen der Erfindung sind Gegenstand der Unteransprüche.

Das erfindungsgemäße Verfahren zur Interpolation eines Bildpunktes in einem Bild, das eine Anzahl von matrixartig angeordneten Bildpunkten aufweist, denen jeweils ein Bildinformationswert zugeordnet ist, umfasst das Auswählen wenigstens eines ersten Bildpunktes, dem ein erster Bildinformationswert zugeordnet ist, und eines zweiten Bildpunktes, dem ein zweiter Bildinformationswert zugeordnet ist, die benachbart zu dem zu interpolierenden Bildpunkt liegen, wobei der zu inter polierende Bildpunkt in einer Interpolationsrichtung zwischen dem ersten und zweiten Bildpunkt liegt. Zu dem ersten Bildpunkt wird dann ein Gradient des ersten Bildinformationswertes in einer Gradientenrichtung, die von der Interpolationsrichtung abweicht, ermittelt, und zu dem zweiten Bildpunkt wird ebenfalls ein Gradient des zugehörigen Bildinformationswertes in der Gradientenrichtung ermittelt. Aus dem wenigstens einen ersten Bildinformationswert und dem wenigstens einen zweiten Bildinformationswert wird anschließend ein Bildinformationswert des zu interpolierenden Bildpunktes ermittelt, wobei hierbei der Bildinformationswert aus der Gruppe mit dem ersten und zweiten Bildinformationswert des ersten und zweiten Bildpunkte stärker gewichtet wird, dessen zugehöriger Gradient betragsmäßig kleiner ist.

Bei dem erfindungsgemäßen Verfahren fließen in die Ermittlung des Bildinformationswertes eines zu interpolierenden Bild-punktes somit Bildinformationen aus der Interpolationsrichtung ein, indem wenigstens zwei zu dem zu interpolierenden Bildpunkt in der Interpolationsrichtung benachbart angeordnete Bildpunkte, denen Bildinformationswerte zugeordnet sind, ausgewählt werden. Außerdem fließen Bildinformationen aus der mit der Interpolationsrichtung nicht übereinstimmenden Gradientenrichtung ebenfalls in die Ermittlung des zu interpolierenden Bildinformationswertes ein, indem der Bildinformationswert des in der Interpolationsrichtung benachbart liegenden Bildpunktes stärker gewichtet wird, dessen zugehöriger Gradient betragsmäßig kleiner ist.

Mathematisch erfolgt die Interpolation des Bildpunktes dadurch, dass der erste Bildinformationswert mit einem ersten Gewichtungsfaktor und der zweite Bildinformationswert mit einem zweiten Gewichtungsfaktor multipliziert und die gewichteten Bildinformationswerte addiert werden, wobei für die Summe der Gewichtungsfaktoren gilt, dass diese gleich 1 ist. Im einfachsten Fall wird der Gewichtungsfaktor des Bildinformationswertes zu 1 gesetzt, dessen Gradient betragsmäßig kleiner ist, während der Gewichtungsfaktor des anderen Bildinformationswertes, dessen Gradient größer ist, zu 0 gesetzt wird.

Vorzugsweise verläuft die Interpolationsrichtung senkrecht zu der Gradientenrichtung. Die Interpolationsrichtung verläuft beispielsweise senkrecht in einem zeilenweise aufgebauten Halbbild, bei dem Bildinformationswerte von Zwischenzeilen zu interpolieren sind, sodass zu jedem zu interpolierenden Bildpunkt einer Zwischenzeile ein Bildpunkt einer über der Zwischenzeile liegenden Bildzeile und ein Bildpunkt einer unter der Zwischenzeile liegenden Bildzeile ausgewählt wird. Die Ermittlung eines Gradienten des Bildinformationswertes eines ausgewählten Bildpunktes verläuft senkrecht zu der Interpolationsrichtung dann zeilenweise, das heißt zur Ermittlung des Gradienten zu einem Bildinformationswert eines Bildpunktes werden in der Zeile benachbart zu dem gegebenen Bildpunkt liegende Bildpunkte ausgewählt.

Stimmen bei dem erfindungsgemäßen Verfahren die Gradienten der Bildinformationswerte des ersten und zweiten Bildpunktes überein, so kann für die Ermittlung des Bildinformationswertes des zu interpolierenden Zwischenpunktes zwischen verschiedenen Vorgehensweisen gewählt werden.

Bei einer ersten Ausführungsform ist vorgesehen, für den Fall dass die Gradienten der Bildinformationswerte des ersten und zweiten Bildpunktes übereinstimmen, als Bildinformationswert des zu interpolierenden Bildpunktes den Mittelwert des ersten und zweiten Bildinformationswertes auszuwählen.

Bei einer zweiten Ausführungsform ist vorgesehen, den Bildinformationswert des zu interpolierenden Zwischenpunktes mittels komplexerer Verfahren zu ermitteln, wobei auf diesen Bildinformationswert nur dann zugegriffen wird, wenn die Gradienten der Bildinformationswerte des ersten und zweiten Bildpunktes übereinstimmen. Ein solches komplexeres Verfahren zur Ermittlung des zu interpolierenden Bildinformationswertes sieht bei der Zwischenzeileninterpolation eines Video-Halbbildes beispielsweise vor, neben dem ersten und zweiten Bildpunkt einen dritten Bildpunkt zu verwenden, der einem zeitlich nachfolgenden Halbbild entstammt und der in dem nachfolgenden Halbbild an derselben Bildposition liegt, wie der zu interpolierende Bildpunkt in dem Halbbild mit der zu interpolierenden Zwischenzeile. Die Bildinformationswerte dieser drei Bildpunkte können dabei geeignet gewichtet und für die Ermittlung des zu interpolierenden Bildinformationswertes miteinander addiert werden, wobei die Gewichtung der Bildinformationswerte derart erfolgt, dass der Bildinformationswert des zu interpolierenden Bildpunktes innerhalb eines durch den ersten und zweiten Bildinformationswert vorgegebenen Intervalls liegt.

Zur Ermittlung des Gradienten eines Bildinformationswertes zu einem gegebenen Bildpunkt sind beliebige herkömmliche Verfahren zur Gradientenermittlung anwendbar.

Im einfachsten Fall wird die Differenz der Bildinformationswerte zweier in der Gradientenrichtung benachbart zu dem gegebenen Bildpunkt liegenden Bildpunkte ermittelt und der Betrag dieser Differenz als Maß für den Gradienten herangezogen. Neben der Betragsbildung kann die ermittelte Differenz auch quadriert oder mit einer beliebigen positiven Zahl größer Null potenziert werden.

Die vorliegende Erfindung wird nachfolgend anhand der beigefügten Figuren erläutert. In den Figuren zeigt

Figur 1     schematisch einen Ausschnitt eines zeilenweise aufgebauten Bildes,

Figur 2     schematisch Ausschnitte zweier aufeinanderfolgender Bilder mit zeilenverkämmten Bildzeilen.

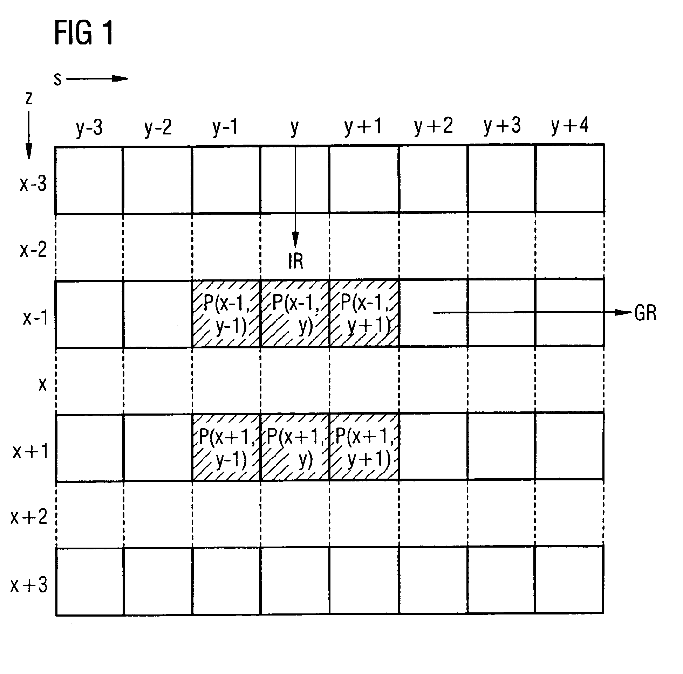

Figur 1 zeigt schematisch einen Ausschnitt eines zeilenweise aufgebauten Bildes, beispielsweise eines Video-Halbbildes, bei welchem Bildinformationswerte nur jeweils zu jeder zweiten Zeile vorliegen, wobei die Bildpunkte dieser Zeilen durch durchgezogene Kästchen veranschaulicht sind, während die Bildpunkte von Zwischenzeilen gestrichelt dargestellt sind.

Mit P(x,y) ist in der Figur 1 ein Bildpunkt einer Zwischenzeile bezeichnet, dessen Bildinformationswert anhand des erfindungsgemäßen Verfahrens wie nachfolgend erläutert interpoliert wird. Hierzu wird zunächst eine Interpolationsrichtung IR gewählt, die in dem Ausführungsbeispiel in Richtung der Spalten bzw. senkrecht zu den Zeilen des matrixartigen Bildes verläuft. Benachbart zu dem zu interpolierenden Bildpunkt P(x,y) werden in der Interpolationsrichtung IR ein erster Bildpunkt P(x+1,y) und ein zweiter Bildpunkt P(x-1,y) gewählt, wobei der zu interpolierende Bildpunkt P(x,y) in der Interpolationsrichtung IR zwischen dem ersten Bildpunkt P(x+1,y) und dem zweiten Bildpunkt P(x-1,y) liegt. Der erste Bildpunkt P(x+1,y) liegt in dem Ausführungsbeispiel in der Bildzeile unterhalb der Zwischenzeile mit dem zu interpolierenden Bildpunkt P(x,y). Der zweite Bildpunkt P(x-1,y) liegt in einer Bildzeile oberhalb der Zwischenzeile mit dem zu interpolierenden Bildpunkt P(x,y).

Jedem dieser Bildpunkte ist ein Bildinformationswert, beispielsweise ein Helligkeitswert, ein Kontrastwert oder ein Farbintensitätswert zugeordnet, der im folgenden mit L(.) bezeichnet ist.

Das erfindungsgemäße Verfahren sieht vor, einen Gradienten zu dem Bildinformationswert L(x+1,y) des ersten Bildpunktes P(x+1,y) und einen Gradienten zu dem Bildinformationswert L(x-1,y) des zweiten Bildpunktes P(x-1,y) in einer Gradientenrichtung GR zu ermitteln, wobei die Gradientenrichtung GR in dem Ausführungsbeispiel senkrecht zu der Interpolationsrichtung IR innerhalb der Zeilen verläuft. Der Gradient des ersten Bildinformationswertes L(x+1,y) wird beispielsweise dadurch ermittelt, indem die Differenz zwischen den Bildinformationswerten L(x+1,y-1) und L(x+1,y+1) der in der Zeile x+1 zu dem ersten Bildpunkt P(x+1,y) benachbarten Bildpunkte P(x+1,y-1), P(x+1,y+1) gebildet wird.

Entsprechend wird der Gradient des Bildinformationswertes L(x-1,y) des zweiten Bildpunktes unter Bildung der Differenz der Bildinformationswerte L(x-1,y-1), L(x-1,y+1) der in der Zeile x-1 zu dem ersten Bildpunkt P(x-1,y) benachbarten Bildpunkte P(x-1,y-1), P(x-1,y+1) gebildet und der Betrag dieser Differenz ermittelt wird. Es gilt also:

$$\texttt{gradient(x-1,y) = |L(x-1,y-1) - L(x-1,y+1)|}$$

$$\texttt{gradient(x+1,y) = |L(x+1,y-1) - L(x+1,y+1)|} \qquad (1)$$

gradient(.) bezeichnet dabei den Gradienten des Bildinformationswertes zu dem jeweiligen Bildpunkt. Bei einer weiteren Ausführungsform der Erfindung wird eine andere Metrik zur Ermittlung des Gradienten herangezogen, wobei hierbei das Quadrat der Differenz aus den Bildinformationswerten der in der Zeile benachbarten Bildpunkte herangezogen wird, es gilt also:

$$\texttt{gradient(x-1,y) = (L(x-1,y-1) - L(x-1,y+1))}^2$$

$$\texttt{gradient(x+1,y) = (L(x+1,y-1) - L(x+1,y+1))}^2 \qquad (2)$$

Selbstverständlich sind beliebige weitere positive Potenzen des Betrags der oben erläuterten Differenz der Bildinformationswerte zweier benachbarter Bildpunkte zur Ermittlung des Gradienten verwendbar.

Das erfindungsgemäße Verfahren sieht nun vor, den zu dem ersten Bildpunkt P(x+1,y ermittelten Gradienten gradient (x+1,y) mit dem für den zweiten Bildpunkt P(x-1,y) ermittelten Gradienten gradient (x-1,y) zu vergleichen und den zu interpolierenden Bildinformationswert L(x,y) unter Verwendung des ersten Bildinformationswertes L(x+1,y) und unter Verwendung des zweiten Bildinformationswertes L(x-1,y) zu ermitteln, wobei der Bildinformationswert stärker gewichtet wird, dessen zugehöriger Gradient kleiner ist. Mathematisch lässt sich die Ermittlung des interpolierten Bildinformationswertes L(x,y) wie folgt darstellen:

$$\texttt{L(x,y) = k1·L(x+1,y)+ k2·L(x-1,y),}$$
$$\texttt{mit k1+k2=1 und 0 ≤k1,k2≤ 1} \qquad (3)$$

k1, k2 bezeichnen dabei die Gewichtungsfaktoren, mit denen die ersten und zweiten Bildinformationswerte L(x+1,y) bzw. L(x-1,y) gewichtet werden, und die von dem Verhältnis der Gradienten zueinander abhängig sind, wobei gilt, dass der Gewichtungsfaktor k1 bzw. k2 größer ist, dessen zugehöriger Gradient verglichen zu dem anderen Gradienten kleiner ist.

Bei einer Ausführungsform der Erfindung ist vorgesehen, dass der Gewichtungsfaktor des Bildinformationswertes, dessen zugehöriger Gradient kleiner ist als der Gradient des anderen Bildinformationswertes, zu 1 gesetzt wird, während der andere Gewichtungsfaktor zu 0 gesetzt wird, es gilt also:

$$\texttt{k1=1 und k2=0, wenn gradient(x-1,y) > gradient(x+1,y)}$$

$$\texttt{k1=0 und k2=1, wenn gradient(x-1,y) < gradient(x+1,y)} \qquad (4)$$

Obige Gleichung (3) berücksichtigt noch nicht den Spezialfall, bei dem die Gradienten der beiden Bildinformationswerte L(x+1,y) gleich groß sind. Der zu interpolierende Bildinformationswert L(x-1,y) kann in diesem Fall auf verschiedenste Art und Weise erzeugt werden. Bei einem Ausführungsbeispiel ist vorgesehen, als Bildinformationswert den Mittelwert des ersten Bildinformationswertes und den Mittelwert des zweiten Bildinformationswertes heranzuziehen, sodass gilt:

$$L(x,y) = M(x,y) = 1/2[L(x+1,y) + L(x-1,y)]$$
$$\text{für gradient}(x-1,y) = \text{gradient}(x+1,y) \qquad (5)$$

wobei M(x,y) den Mittelwert der zu dem Bildpunkt P(x,y) oberhalb und unterhalb benachbarten Bildpunkte P(x+1,y) und P(x-1,y) bezeichnet.

Bei einer weiteren Ausführungsform der Erfindung ist vorgesehen, neben dem ersten und zweiten Bildinformationswert L(x+1,y), L(x-1,y) auch stets diesen Mittelwert mit in die Ermittlung des interpolierten Bildinformationswertes einfließen zu lassen, sodass für den interpolierten Bildinformationswert L(x,y) gilt:

$$L(x,y) = k11 \cdot L(x+1,y) + k21 \cdot L(x-1,y) + k31 \cdot M(x,y)$$
$$\text{mit } k11+k21+k31=1 \text{ und } 0 \leq k11,k21,k31 \leq 1 \qquad (6)$$

Bei einer Ausführungsform ist dabei vorgesehen, den Gewichtungsfaktor des Bildinformationswertes zu 0 zu setzen, dessen zugehöriger Gradient größer ist als der zugehörige Gradient des anderen Bildinformationswertes, sodass gilt:

$$k11 = 0, \text{ wenn } \text{gradient}(x-1,y) < \text{gradient}(x+1,y)$$

$$k21 = 0, \text{ wenn } \text{gradient}(x-1,y) > \text{gradient}(x+1,y) \qquad (7)$$

Die beiden verbleibenden Gewichtungsfaktoren k31 und k21 bzw. k31 und k11 werden vorzugsweise so gewählt, dass deren Verhältnis von der Differenz der Bildinformationswerte des ersten und zweiten Bildpunktes P(x+1,y), P(x-1,y) abhängig ist, wobei der Gewichtungsfaktor k31 des Mittelwertes M(x,y) mit zunehmender Differenz abnimmt, sodass mit zunehmender Differenz der Bildinformationswerte L(x+1,y), L(x-1,y) der erste oder zweite Bildinformationswert im Vergleich zu dem Mittelwert M(x,y) stärker gewichtet wird. Dies bringt den Vorteil mit sich, dass vertikal verlaufende Kanten in dem Bild exakter dargestellt werden.

Anstelle des Mittelwertes M(x,y) kann in den Gleichungen (5) und (6) auch ein Bildinformationswert verwendet werden, der beispielsweise anhand eines anderen Interpolationsverfahrens ermittelt wurde, beispielsweise anhand eines Interpolationsverfahrens, welches auch Bildinformationswerte eines Halbbildes berücksichtigt, das zeitlich auf das Halbbild mit der zu interpolierenden Zwischenzeile folgt. Dieser Bildinformationswert wird bei dem Spezialfall gemäß Gleichung (5) dann berücksichtigt, wenn die Gradienten zu den ersten und zweiten Bildinformationswerten gleich sind, und in dem Fall gemäß Gleichung (6) stets berücksichtigt.

Unabhängig davon, ob bei der Ermittlung des Bildinformationswertes Lx neben dem ersten und zweiten Bildinformationswert L(x+1,y), L(x-1,y) ein weiterer Bildinformationswert berücksichtigt wird, wird bei einer Ausführungsform mit abnehmender betragsmäßiger Differenz zwischen den Bildinformationswerten L(x+1,y), L(x-1,y) derjenige Bildinformationswert stärker gewichtet, dessen zugehöriger Gradient kleiner ist.

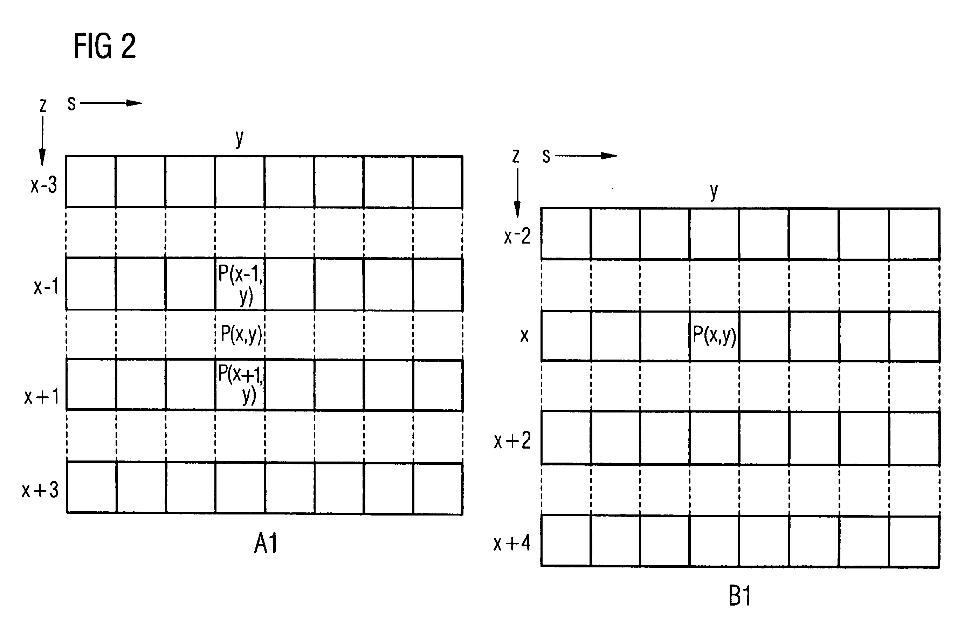

Figur 2 zeigt schematisch Ausschnitte zweier aufeinanderfolgender zeilenverkämmter Halbbilder A1, B1 wobei der zu interpolierende Bildpunkt P(x,y) in dem ersten Halbbild A1 liegt. Für die Ermittlung eines Bildinformationswertes, der in dem Fall gemäß Gleichung (5) dann berücksichtigt wird, wenn die Gradienten der ersten und zweiten Bildinformationswerte L(x+1,y), L(x-1,y), gleich sind, oder der in dem Fall gemäß Gleichung (6) stets berücksichtigt wird, wird bei diesem Ausführungsbeispiel ein Bildpunkt P(x,y) des zweiten Halbbildes B1 herangezogen, wobei die Position dieses Bildpunktes der Position des zu interpolierenden Bildpunktes P(x,y) in dem ersten Halbbild A1 entspricht. Dieser zusätzlich berücksichtigte Bildinformationswert wird beispielsweise dadurch ermittelt, dass die Bildinformationswerte der Bildpunkte P(x+1,y und P(x-1,y) des ersten Halbbildes A1 und des Bildinformationswertes zu dem Bildpunkt P(x,y) in dem zweiten Halbbild B1 geeignet gewichtet und aufsummiert werden. Weiterhin besteht die Möglichkeit, diese drei Bildinformationswerte einer Medianfilterung zu unterziehen und den Filterausgangswert als weiteren Bildinformationswert anstelle des Mittelwertes M(x,y) in den Gleichungen (5) und (6) zu verwenden.

Wenngleich anhand des Ausführungsbeispieles ein einfaches Verfahren zur Ermittlung eines Gradienten zu dem Bildinformationswert eines gegebenen Bildpunktes erläutert wurde, sei darauf hingewiesen, dass selbstverständlich beliebige Verfahren herangezogen werden können, die zur Ermittlung des Gradienten des Bildinformationswertes zu einem gegebenen Bildpunkt geeignet sind, und die selbstverständlich mehr als nur zwei benachbarte Bildpunkte bei der Gradientenermittlung heranziehen können.

Bei einer Ausführungsform ist vorgesehen, bei der Ermittlung des Gradienten des Bildinformationswertes zu einem gegebenen Bildpunkt den Gradienten zu dem gegebenen Bildpunkt in der oben erläuterten Weise und auch die Gradienten zu wenigstens zwei benachbarten Bildpunkten in der oben erläuterten Weise zu ermitteln und dem gegebenen Bildpunkt den kleinsten der ermittelten Gradientenwerte zuzuordnen.

## Patentansprüche

1. Verfahren zur Interpolation eines Bildpunktes (P(x,y)) in einem Bild, das eine Anzahl von matrixartig in Zeilen und Spalten angeordneten Bildpunkten aufweist, denen jeweils ein Bildinformationswert zugeordnet ist, wobei das verfahren folgende Verfahrensschritte aufweist:

   - Auswählen wenigstens eines ersten Bildpunktes (P(x+1,y)), dem ein erster Bildinformationswert (L(x+1,y)) zugeordnet ist, und eines zweiten Bildpunktes (P(x-1,y)), dem ein zweiter Bildinformationswert (L(x-1,y)) zugeordnet ist, die benachbart zu dem zu interpolierenden (P(x,y)) Bildpunkt liegen, wobei der zu interpolierende Bildpunkt (P(x,y)) in einer Interpolationsrichtung (IR) zwischen dem ersten und zweiten Bildpunkt (P(x+1,y)), (P(x-1,y)), liegt, wobei die Interpolationsrichtung (IR) senkrecht zu den Zeilen des Bildes Verläuft,
   - Ermitteln jeweils eines Gradienten des Bildinformationswertes zu dem ersten und zweiten Bildpunkt (P(x+1,y)), (P(x-1,y)) jeweils in einer Gradientenrichtung (GR), die senkrecht zu der Interpolationsrichtung (IR) verläuft,
   - Ermitteln eines Bildinformationswertes (L(x,y)) des zu interpolierenden Bildpunktes, das das Gewichten des ersten Bildinformationswertes (L(x+1,y)) mit einem ersten Gewichtungsfaktor, das Gewichten des zweiten Bildinformationswertes (L(x-1,y)) mit einem zweiten Gewichtungsfaktor und das Addieren der gewichteten Bildinformationswerte umfasst, wobei der Bildinformationswert (L(x+1,y); L(x-1,y)) des Bildpunktes (P(x+1,y); P(x-1,y)) stärker gewichtet wird, dessen zugehöriger Gradient kleiner ist.

2. verfahren nach Anspruch 1, bei dem von dem ersten und zweiten Bildinformationswert (L(x+1,y); L(x-1,y)) derjenige mit 1 gewichtet wird, dessen zugehöriger Gradient kleiner ist, während der andere mit 0 gewichtet wird.

3. Verfahren nach Anspruch 1 oder 2, bei dem der Mittelwert (M(x,y))des ersten und zweiten Bildinformationswertes (L(x+1,y); L(x-1,y)) als Bildinformationswert (L(x,y)) des zu interpolierenden Bildpunkts (P(x,y)) ausgewählt wird, wenn die dem ersten und zweiten Bildinformationswert (L(x+1,y); L(x-1,y)) zugeordneten Gradienten übereinstimmen.

4. Verfahren nach einem der Ansprüche 1 bis 3, bei dem das Bild ein aus einem Videosignal resultierendes erstes Halbbild ist, wobei der zu interpolierende Bildpunkt (P(x,y)) einer Zwischenzeile des Halbbildes, der erste Bildpunkt (P(x+1,y)) einer unterhalb der Zwischenzeile liegenden Zeile und der zweite Bildpunkt (P(x-1,y)) einer oberhalb der Zwischenzeile liegenden Zeile entstammt.

5. Verfahren nach Anspruch 4, bei dem folgende Bildinformationswerte gewichtet und bei dem die **dadurch** erhaltenen gewichteten Bildinformationswerte zur Ermittlung des Bildinformationswertes des zu interpolierenden Bildpunktes addiert werden, wenn die dem ersten und zweiten Bildpunkt zugeordneten Gradienten übereinstimmen:

   - der erste Bildinformationswert (L(x+1,y)),
   - der zweite Bildinformationswert (L(x-1,y)),
   - der Bildinformationswert eines Bildpunktes in einem dem ersten Halbbild nachfolgenden zweiten Halbbild, wobei die Position des Bildpunktes des zweiten Halbbildes der Position des zu interpolierenden Bildpunktes (P(x,y)) in dem ersten Halbbild entspricht.

6. Verfahren nach einem der vorangehenden Ansprüche, bei dem der einem gegebenen Bildpunkt zugeordnete Gradient des Bildinformationswertes durch folgende Verfahrensschritte ermittelt wird:

   - Bilden der Differenz zwischen dem Bildinformationswert des gegebenen Bildpunktes (P(x+1,y); P(x-1,y)) und eines benachbarten Bildpunktes (P(x+1,y-1); P(X+1,y+1); P(x-1,y-1); P (x-1, y+1)),
   - Ermitteln des Betrages oder einer positiven Potenz der Differenz.

7. Verfahren nach einem der Ansprüche 1 bis 6, bei dem der einem gegebenen Bildpunkt (P(x+1,y); P(x-1,y)) zugeordnete Gradient des Bildinformationswertes durch folgende Verfahrensschritte ermittelt wird:

- Bilden der Differenz zwischen dem Bildinformationswert eides zu dem gegebenen Bildpunkt (P(x+1,y); P(x-1,y)) in der Gradientenrichtung ersten benachbarten Bildpunktes (P(x+1,y-1); P(x-1,y-1)) und eines zu dem gegebenen Bildpunkt in der Gradientenrichtung zweiten benachbarten Bildpunktes (P(x+1,y+1); P(x-1,y+1)) ,
- Ermitteln des Betrages oder einer positiven Potenz der Differenz.

**8.** Verfahren nach einem der vorangehenden Ansprüche, bei dem die Differenz des ersten und zweiten Bildinformationswertes (L(x+1,y); L(x-1,y)) gebildet wird, wobei der Bildinformationswert des Bildpunktes (P(x+1,y); P(x-1,y)) mit dem kleineren Gradienten um so weniger gewichtet wird, je größer diese Differenz ist.

**Claims**

**1.** A method for the interpolation of a pixel (P(x,y)) in an image that comprises a number of pixels arrayed in lines and columns in matrix-like fashion, to each of which an image information value is assigned, the method comprising the following steps:

- selecting at least a first pixel (P(x+1,y)) to which a first image information value (L(x+1,y)) is assigned, and a second pixel (P(x-1,y)) to which a second image information value (L(x-1,y)) is assigned, which are located adjacent to the pixel to be interpolated (P(x,y)), whereby the pixel (P(x,y)) to be interpolated is located in an interpolation direction (IR) between the first and second pixels (P(x+1,y)), (P(x-1,y)), the interpolation direction (IR) extending perpendicularly to the lines of the image,
- determining a gradient of each image information value at the first and second pixels (P(x+1,y)), (P(x-1,y)), each in a gradient direction (GR) that extends perpendicularly to the interpolation direction (IR),
- determining an image information value (L(x,y)) of the pixel to be interpolated, which includes the weighting of the first image information value (L(x+1,y)) with a first weighting factor, the weighting of the second image information value (L(x-1,y)) with a second weighting factor and the adding together of the weighted image information values, whereby a greater weight is accorded to the image information value (L(x+1,y); L(x-1,y)) of the pixel (P(x+1,y); P(x-1,y)) whose associated gradient is smaller.

**2.** A method according to Claim 1,
in which, of the first and second image information values (L(x+1,y); L(x-1,y)), a weight of 1 is accorded to the image information value whose associated gradient is smaller while a weight of 0 is accorded to the other image information value.

**3.** A method according to Claim 1 or 2,
in which the average (M(x,y)) of the first and the second image information values (L(x+1,y); L(x-1,y)) is selected as the image information value (L(x,y)) of the pixel (P(x,y)) to be interpolated if the gradients assigned to the first and second image information values (L(x+1,y); L(x-1,y)) coincide.

**4.** A method according to one of Claims 1 to 3,
in which the image is a first field resulting from a video signal, whereby the pixel to be interpolated (P(x,y)) originates from an intermediate line of the field, the first pixel (P(x+1,y)) originates from a line located beneath the intermediate line and the second pixel (P(x-1,y)) originates from a line located above the intermediate line.

**5.** A method according to Claim 4,
in which the following image information values are weighted and in which the weighted image information values obtained thereby are added for the determination of the image information value of the pixel to be interpolated when the gradients assigned to the first and second pixels coincide:

- the first image information value (L(x+1,y)),
- the second image information value (L(x-1,y)),
- the image information value of a pixel in a second field following the first field, whereby the position of the pixel of the second field corresponds to the position of the pixel to be interpolated (P(x,y)) in the first field.

**6.** A method according to one of the preceding Claims,
in which the gradient of the image information value assigned to a given pixel is determined by the following method steps:

- calculating the difference between the image information value of the given pixel (P(x+1,y); P(x-1,y)) and of an adjacent pixel (P(x+1,y-1) P(x+l,y+l); P(x-1,y-1) P(x-1,y+1)),
- determining the absolute value or a positive power of the difference.

7. A method according to one of Claims 1 to 6,
in which the gradient of the image information value assigned to a given pixel (P(x+1,y); P(x-1,y)) is determined by the following method steps:

- calculating the difference between the image information value of a first pixel (P(x+1,y-1); P(x-1,y-1)) adjacent to the given pixel (P(x+1,y); P(x-1,y)) in the gradient direction and of a second pixel (P(x+1,y+1); P(x-1,y+1)) adjacent to the given pixel in the gradient direction,
- determining the absolute value or a positive power of the difference.

8. A method according to any one of the preceding Claims,
in which the difference between the first and the second image information values (L(x+1,y); L(x-1,y)) is formed, whereby less weight is accorded to the image information value of the pixel (P(x+1,y); P(x-1,y)) with the smaller gradient the greater this difference is.

**Revendications**

1. Procédé d'interpolation d'un point image (P(x,y)) dans une image comportant un nombre de points images répartis sous la forme d'une matrice en lignes et en colonnes, et auxquels est associée une valeur d'information d'image, procédé comprenant les étapes suivantes :

- sélectionner au moins un premier point image (P(x+l,y)) auquel est associée une première valeur d'information d'image (L(x+1,y)), et un second point image (P(x-1,y)) auquel est associée une seconde valeur d'information d'image (L(x-1,y)), ces points étant situés au voisinage du point image (P(x,y)) à interpoler, le point image (P(x,y)) à interpoler étant situé dans une direction d'interpolation (IR) comprise entre le premier et le second point image (P(x+1,y)), P(x-1)y)), la direction d'interpolation (IR) étant perpendiculaire aux lignes de l'image,
- déterminer chaque fois un gradient de la valeur d'information d'image du premier et du second point image (P(x+1,y)), P(x-1)y)), dans une direction de gradient (GR) respective, perpendiculaire à la direction d'interpolation (IR),
- déterminer une valeur d'information d'image (L(x,y)) du point image à interpoler, comprenant la pondération de la première valeur d'information d'image (L(x+1,y)) par un premier coefficient de pondération, la pondération de la seconde valeur d'information d'image (L(x-1,y)) par un second coefficient de pondération et l'addition des deux valeurs pondérées d'information d'image, la valeur d'information d'image (L(x+1,y) ; L(x-1,y)) du point image (P(x+1,y) ; P(x-1)y)) appartenant au gradient le plus faible, étant pondéré le plus fortement.

2. Procédé selon la revendication 1,
selon lequel
on pondère celle de la première et de la seconde valeur d'information d'image (L(x+1,y) ; L(x-1,y)) dont le gradient correspondant est le plus petit, par le coefficient de pondération (1) alors que l'on pondère l'autre valeur par le coefficient de pondération (0).

3. Procédé selon la revendication 1 ou 2,
selon lequel
on sélectionne la valeur moyenne (M(x,y)) de la première et de la seconde valeur d'information d'image (L(x+1,y) ; L(x-1,y)) comme valeurs d'information d'image (L(x,y)) du point d'image (P(x,y)) à interpoler, si les gradients de la première et de la seconde valeur d'information d'image (L(x+1,y) ; L(x-1,y)) se correspondent.

4. Procédé selon l'une des revendications 1 à 3,
selon lequel
l'image est une première demi-image (trame) résultant d'un signal vidéo et le point image (P(x,y)) à interpoler provient d'une ligne intermédiaire de la demi-image (trame), le premier point image (P(x+1,y)) provenant d'une ligne située en dessous de la ligne intermédiaire et le second point image (P(x-1,y)) provenant d'une ligne située au-dessus de la ligne intermédiaire.

**5.** Procédé selon la revendication 4,
selon lequel
on pondère les valeurs d'information d'image et
on additionne les valeurs d'information d'image, pondérées, obtenues, pour déterminer la valeur d'information d'image du point image à interpoler si le gradient du premier point image et celui du second point image concordent :

- la première valeur d'information d'image (L(x+1,y)),
- la seconde valeur d'information d'image (L(x-1,y)),
- la valeur d'information d'image d'un point image dans une seconde demi-image (trame) à la suite de la première demi-image (trame), la position du point image de la seconde demi-image (trame) correspondant à la position du point image (P(x,y)) à interpoler dans la première demi-image (trame).

**6.** Procédé selon l'une des revendications précédentes,
selon lequel
on détermine le gradient de la valeur d'information d'image associé à un point image donné par les étapes de procédés suivantes :

- former la différence entre la valeur d'information d'image du point image donné (P(x+1,y) ; P(x-1,y)) et d'un point image voisin (P(x+1,y-1) ; P(x+1,y+1) ; P(x-1,y-1) ; P(x-1,y+1)),
- déterminer la valeur ou une puissance positive de la différence.

**7.** Procédé selon l'une des revendications 1 à 6,
selon lequel
le gradient la valeur d'information d'image associée à un point image donné (P(x+1,y) ; P(x-1,y)), se détermine par les étapes de procédé suivantes :

- former la différence entre la valeur d'information d'image d'un point image donné (P(x+1,y) P(x-1,y)) dans la direction du gradient d'un premier point image voisin (P(x+1,y-1) ; P(x-1,y-1)) et d'un second point image voisin (P(x+1,y+1) ; P(x-1,y+1)) du point image donné dans la direction du gradient,
- déterminer la valeur ou une puissance positive de la différence.

**8.** Procédé selon l'une des revendications précédentes,
selon lequel
on forme la différence de la première et de la seconde valeur d'information d'image (L(x+1,y) ; L(x-1,y)), et on pondère la valeur d'information d'image du point image (P(x+1,y) ; P(x-1,y)) avec le gradient le plus petit, par une pondération d'autant plus faible que la différence est grande.

## FIG 1

FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6281875 B1